# EUROPÄISCHE PATENTSCHRIFT

(11) **EP 3 031 631 B1**
(45) Veröffentlichungstag und Bekanntmachung des Hinweises auf die Patenterteilung: **03.07.2019**
(21) Anmeldenummer: 15184377.8
(22) Anmeldetag: 09.09.2015
(51) Int. Cl.: B60C 17/10, B60C 17/04, B60C 17/00, B60C 17/06

(54) **FAHRZEUGLUFTREIFEN AUFWEISEND EINE NOTLAUFSCHICHT**
PNEUMATIC VEHICLE TYRE WITH AN EMERGENCY LAYER
PNEUMATIQUES DE VEHICULE PRESENTANT UNE COUCHE DE SECOURS

(30) Priorität: 08.12.2014 DE 102014225108
(43) Veröffentlichungstag der Anmeldung: 15.06.2016
(73) Patentinhaber: Continental Reifen Deutschland GmbH, 30165 Hannover (DE)
(72) Erfinder: Kraus, Martin Josef, 31162 Bad Salzdetfurth (DE)
(74) Vertreter: Finger, Karsten

(56) Entgegenhaltungen:
- EP-A1- 0 158 039
- EP-A2- 0 140 074
- EP-A2- 0 142 844
- US-A- 2 987 093
- US-A1- 2003 226 628
- US-A1- 2004 147 408

## Beschreibung

Die Erfindung betrifft einen Fahrzeugluftreifen für ein Radsystem aufweisend eine Felge mit Felgenhörnern, den auf der Felge montierten Fahrzeugluftreifen und eine auf der Felge axial innerhalb des Fahrzeugluftreifens montierte Stützvorrichtung, deren radiale Höhe die radiale Höhe der Felgenhörner übersteigt, wobei im Notlauf die Stützvorrichtung radial außerhalb der radialen Höhe der Felgenhörner mit dem Fahrzeugluftreifen in Berührung kommt und Last aufnimmt, wobei der Fahrzeugluftreifen Seitenwände, Wulste mit Wulstkernen, eine Karkasse, welche vom Zenitbereich des Fahrzeugluftreifens über die Seitenwände bis in die Wulstbereiche reicht und dort durch Umschlingen zugfester Wulstkerne verankert ist, ein radial außerhalb der Karkasse befindliches Laufstreifen-Gürtelpaket und eine radial innerhalb der Karkasse angeordnete Innenschicht aufweist, wobei der Fahrzeugluftreifen radial innerhalb der Innenschicht eine Notlaufschicht aufweist und wobei die Notlaufschicht so angeordnet ist, dass im Notlauf die Notlaufschicht und die Stützvorrichtung kontaktieren und wobei die Lastaufnahme durch die Stützvorrichtung zumindest teilweise im Bereich der Kontaktfläche zwischen Notlaufschicht und Stützvorrichtung erfolgt. Weiter betrifft die Erfindung ein Radsystem aufweisend eine Stützvorrichtung und einen solchen Fahrzeugluftreifen.

Ein solcher Fahrzeugluftreifen ist am Fahrzeug in der Regel luftdicht auf einer Felge montiert. Durch einen Überdruck im Radsystem wird der Fahrzeugluftreifen dabei in Form gehalten. Im Pannenfall eines solchen Fahrzeugluftreifens entweicht in der Regel Luft und der Fahrzeugluftreifen kann nicht mehr oder nicht mehr ausreichend in Form gehalten werden. Bei einem Notlauf, d.h. einer Fahrt mit zu wenig oder keinem Überdruck im Radsystem erfolgt durch Walkarbeit und/oder Reibung eine starke Erhitzung des Fahrzeugluftreifens, welche eine Weiterfahrt des Fahrzeuges erschwert oder unmöglich macht und die Zerstörung des Fahrzeugluftreifens zur Folge haben kann. In einem Pannenfall, beispielsweise einem zivilen oder einem militärischen Pannenfall, kann es aber notwendig sein, dass das Fahrzeug im Notlauf vom Ort des Pannenfalls wegbewegt werden muss.

Um die Laufleistung im Notlauf zu erhöhen ist es bekannt, auf der Felge axial zwischen den Felgenhörnern eine ringförmige Stützvorrichtung zu montieren, deren radiale Höhe in der Regel die radiale Höhe der Felgenhörner übersteigt. Jeder Wulst des Fahrzeugluftreifens liegt dabei axial zwischen der Stützvorrichtung und einem Felgenhorn. Bei Abplattung im Notlauf liegt der Fahrzeugluftreifen somit nicht primär auf den Felgenhörnern sondern auf der Stützvorrichtung auf, wodurch insbesondere die Wärmeentwicklung im axial äußeren Bereich des Fahrzeugluftreifens stark verringert wird. Die Stützvorrichtung nimmt somit Last auf. Da der radiale Innenumfang des Fahrzeugluftreifens allerdings größer ist als der radiale Außenumfang der Stützvorrichtung, wird durch die Reibung zwischen Fahrzeugluftreifen und Stützvorrichtung bei fortlaufendem Notlauf der Fahrzeugluftreifen und / oder die Stützvorrichtung durch mechanischen Abtrag und / oder Temperatur zerstört. Um die Reibung im Notlauf zu verringern und die Zerstörung des Fahrzeugluftreifens und / oder der Stützvorrichtung hinauszuzögern ist es bekannt, bei der Reifenmontage Fett in das Radsystem zu verfüllen. Dieses ist allerdings schnell verbraucht und im Notlauf nicht am Ort großer Reibung konzentriert sondern im ganzen Radsystem verteilt. Zudem verkompliziert die Verfüllung des Fetts die Montage des Fahrzeugluftreifens auf der Felge.

Die EP 0 140 074 A2 und die EP 0 158 039 A1 offenbaren jeweils einen Reifen mit Radsystem aufweisend eine Stützvorrichtung, wobei die radial innere Wand des Reifens einen Gleitmittelbelag aufweist. Die US 2003/0226628 A1 offenbart eine entsprechende Kombination, wobei das Gleitmittel eine Substanz aus der Gruppe gebildet aus natürlichem Gummi und Polyurethan aufweist. Die US 2004/147408 A1 offenbart ein Schmiermittel für einen Notlaufreifen aufweisend Wax.

Die US 2 987 093 offenbart einen Reifen mit Felge, wobei der Raum zwischen Reifen und Felge durch eine ringförmige, flexible, im wesentlichen luftundurchlässige Membran, welche durch eine gummierte Festigkeitsträgerlage verstärkt ist, in zwei Luftkammern getrennt ist, welche separat aufblasbar sind. Hierbei weist die radial innere Oberfläche des Reifens Gummi auf, in welchen ein Schmiermittel, welches inkompatibel mit dem Gummi ist, physikalisch eingebettet ist. Als Schmiermittel eignen sich Silikonöle, Glyzerin oder Kastoröl.

Die EP 0142844 A2 offenbart einen Fahrzeugluftreifen mit Radsystem gemäß Oberbegriff aufweisend eine breite Notlauf-Stützvorrichtung im Felgenbett. Auf die Reifeninnenfläche ist ein Material geringer Reibung, z.B. ein geeignetes Gleitmittel, aufgetragen.

Der Erfindung liegt die Aufgabe zugrunde, einen Fahrzeugluftreifen für ein Radsystem mit Stützvorrichtung zur Verfügung zu stellen, der sich durch eine erhöhte Laufleistung des Radsystems im Notlauf auszeichnet.

Die Aufgabe wird gelöst, indem die Notlaufschicht aus elastomerem Material ist und indem das elastomere Material zumindest ein Wachs und / oder zumindest ein Fett enthält, wobei das elastomere Material einen höheren Gewichtsanteil (Gew.-%) an Wachs und / oder an Fett aufweist als die Karkassgummierung.

Der Fahrzeugluftreifen zeichnet sich dadurch aus, dass im Notlauf das Wachs und / oder das Fett die Reibung zwischen Fahrzeugluftreifen und Stützvorrichtung verringert und somit die Laufleistung des Radsystems im Notlauf erhöht ist. Dabei ist die Notlaufschicht so angeordnet, dass im Notlauf die Lastaufnahme durch die Stützvorrichtung zumindest teilweise im Bereich der Kontaktfläche von Notlaufschicht und Stützvorrichtung erfolgt. Stützvorrichtung und Notlaufschicht können dabei zunächst durch eine oder mehrere weitere Schichten in radialer Richtung getrennt sein, welche im Notlauf an der Reibungsfläche zerstört werden, wodurch die Notlaufschicht in direkten Kontakt mit der Stützvorrichtung kommt. Notlaufschicht und Stützvorrichtung werden gegeneinander gepresst. Da an der Kontaktfläche der radial äußere Radius der Stützvorrichtung kleiner ist als der radial innere Radius der Notlaufschicht (gemessen im montierten Zustand ohne Notlauf) reiben Stützvorrichtung und Notlaufschicht im Notlauf aneinander. Das elastomere Material der Notlaufschicht ist durch den Zusatz von Fett und / oder Wachs so ausgebildet, dass es durch mit dem Notlauf einhergehende Belastungen wie erhöhter Druck, erhöhte Temperatur und / oder Reibung eine reibungsmindernde Wirkung zumindest an der Kontaktfläche zur Stützvorrichtung entfaltet. Die reibungsmindernde Wirkung erfolgt somit am Ort großer Reibung, wodurch die mechanische Beanspruchung dort zuverlässig vermindert und auch die mit der Reibung einhergehende Wärmeentwicklung verringert ist. Hierdurch ist die Zerstörung des Fahrzeugluftreifens und/oder der Stützvorrichtung verzögert. Die Laufleistung eines Radsystems aufweisend einen solchen Fahrzeugluftreifens ist somit im Notlauf erhöht.

Zweckmäßig ist es, wenn die Notlaufschicht über den Umfang des Fahrzeugluftreifens geschlossen ist.

Vorteilhaft ist es, wenn sich das elastomere Material der Notlaufschicht in radialer Richtung ändert, bevorzugt wenn sich der Gewichtsanteil (Gew.-%) an Fett und / oder Wachs des elastomeren Materials in radialer Richtung ändert. Hierdurch kann das Abriebverhalten der Notlaufschicht spezifisch eingestellt werden. Die Reibung kann somit zuverlässig über einen längeren Zeitraum vermindert und die Zerstörung des Fahrzeugluftreifens und/oder des Stützelementes verzögert werden. Die Laufleistung eines solchen Fahrzeugluftreifens im Notlauf ist somit erhöht.

Es ist vorteilhaft, wenn die Notlaufschicht ein oder mehrere Depots aufweist, welche eine Substanz mit reibungsmindernder Wirkung, insbesondere eine Substanz mit reibungsmindernder Wirkung enthaltend zumindest ein Wachs und / oder zumindest ein Fett, enthalten. Hierdurch wird die reibungsmindernde Wirkung der Notlaufschicht zusätzlich erhöht, wodurch die Laufleistung im Notlauf zusätzlich erhöht wird. Ein Depot ist dabei ein Hohlraum im elastomeren Material, der die Substanz mit reibungsmindernder Wirkung beinhaltet. Die Wand des Depots kann aus einem zum elastomeren Material verschiedenen Material gebildet sein. Depots können die gleiche oder eine unterschiedliche Geometrie aufweisen und die gleiche oder eine unterschiedliche Substanzen beinhalten. Durch die Verteilung der Depots in der Notlaufschicht und/oder die Größe der Depots kann die reibungsmindernde Wirkung gezielt beeinflusst werden.

Vorteilhaft ist es auch, wenn zwischen der Notlaufschicht und der Karkasse eine Schicht angeordnet ist, die für das Wachs und / oder das Fett des elastomeren Materials der Notlaufschicht weitgehend undurchlässig ist. Hierdurch kann eine Ausbreitung von Wachs und / oder Fett von der Notlaufschicht in andere Bereiche des Reifens vermieden bzw. vermindert werden. Zweckmäßig ist es, wenn die Schicht radial außen an die Notlaufschicht anschließt, insbesondere wenn die Schicht die Innenschicht ist. Zweckmäßig ist es auch, wenn die Schicht die gesamte Innenseite des Fahrzeugluftreifens, zumindest aber die radial äußere Oberfläche der Notlaufschicht, bedeckt. Zweckmäßig ist es auch, wenn die Schicht auf der Oberfläche der Notlaufschicht, insbesondere auf der gesamten Oberfläche der Notlaufschicht, angebracht ist.

Vorteilhaft ist es, wenn die Notlaufschicht eine spezifische Wärmeleitfähigkeit aufweist, die größer ist als die spezifische Wärmeleitfähigkeit der Innenschicht und/oder die größer ist als die spezifische Wärmeleitfähigkeit der Karkassgummierung, insbesondere unter Notlaufbedingungen. Hierdurch ist eine schnelle Ableitung der im Notlauf entstehenden Wärme gewährleistet, wodurch die Laufleistung erhöht ist.

Zweckmäßig ist es, wenn die Innenschichtmischung auf einem Halobutyl-Kautschuk oder einer Innenschichtmischung für Schlauchreifen basiert.

Vorteilhaft ist es auch, wenn die Notlaufschicht so angeordnet ist, dass die axiale Ausdehnung der Notlaufschicht zumindest der axialen Ausdehnung der im Notlauf Last aufnehmenden Oberfläche der Stützvorrichtung entspricht. Hierdurch kann sich die reibungsmindernde Wirkung im Notlauf auf der gesamten Last aufnehmenden Oberfläche der Stützvorrichtung entfalten.

In einer bevorzugten Ausführungsform weist die radial innere Oberfläche der Notlaufschicht ein Profil auf. Hierdurch ist die Austrittsoberfläche für das Wachs und / oder Fett vergrößert und das Fahrverhalten den Radsystems verbessert. Bevorzugt weist das Profil dabei Profilrillen in Umfangsrichtung auf.

In einer weiteren bevorzugten Ausführungsform weist die radial äußere Oberfläche der Notlaufschicht ein Profil und die daran angrenzende Oberfläche der radial nächsten Schicht ein dazu gegengleiches Profil auf. Hierdurch ist die Kontaktoberfläche zwischen den Schichten erhöht, wodurch der Zusammenhalt der Schichten durch die vergrößerte Oberfläche, die für eine Verbindung durch Vulkanisation und/oder eine elastische Klebeverbindung zur Verfügung steht, im Vergleich zu einer unprofilierten Oberfläche verbessert ist. Vorteilhaft ist eine Profilierung zudem zur Bewältigung von im Notlauf auftretenden Kräften wie Seiten- und/oder Torsionskräften. Bevorzugt weist das Profil dabei Profilrillen in Umfangsrichtung auf.

Eine Erhöhung der Laufleistung im Notlauf ist vorteilhaft für Nutzfahrzeugreifen. Insbesondere für Nutzfahrzeugreifen für Militärfahrzeuge, für Feuerwehrfahrzeuge, für Unimogs, für Off-Road-Fahrzeuge oder für ein Fahrzeug für den Einsatz in Steinbrüchen, Minen oder als Kran, ist die zuverlässige Erhöhung der Laufleistung im Notlauf vorteilhaft.

Die Erfindung umfasst auch ein Radsystem für Kraftfahrzeuge aufweisend eine Felge mit Felgenhörnern, einen auf der Felge montierten Fahrzeugluftreifen aufweisend eine Notlaufschicht aus elastomerem Material enthaltend Wachs und / oder Fett und eine auf der Felge axial innerhalb des Fahrzeugluftreifens montierte Stützvorrichtung, deren radiale Höhe die radiale Höhe der Felgenhörner übersteigt, wobei im Notlauf der Zenitbereich des Fahrzeugluftreifens mit der Stützvorrichtung in Berührung kommt und die Stützvorrichtung Last aufnimmt.

Die reibungsmindernde Wirkung des Fettes und / oder Waches des elastomeren Materials der Notlaufschicht sorgt so für eine kontinuierliche Verminderung der Reibung an der Kontaktfläche zwischen der Notlaufschicht und dem Stützelement. Das die unter der mit dem Notlauf einhergehenden Belastung reibungsmindernde elastomere Material der Notlaufschicht wird somit am Ort großer Reibung zur Verfügung gestellt, wodurch die Reibung dort zuverlässig vermindert und die Zerstörung des Fahrzeugluftreifens und/oder der Stützvorrichtung verzögert wird. Die Laufleistung eines solchen Fahrzeugluftreifens im Notlauf ist somit erhöht. Zudem ist die Notlaufschicht ein Bestandteil des Fahrzeugluftreifens, wodurch der Fahrzeugluftreifen des Radsystems einfach auf zu montieren ist. Ein zusätzlicher Arbeitsschritt, wie das Verfüllen von Fett, ist nicht nötig.

Vorzugsweise ist das Stützelement so ausgebildet, dass es die Wülste des Fahrzeugluftreifens zumindest im Notlauf gegen die Felgenhörner presst und auf der Felge fixiert.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Radialschnitt durch ein erfindungsgemäßes Radsystem;
Fig. 2 und Fig. 3 jeweils einen Teilradialschnitt durch einen erfindungsgemäßen Fahrzeugluftreifen;
Fig. 4 bis Fig. 6 jeweils einen Abschnitts eines Profils einer Oberfläche einer N otlaufschicht.

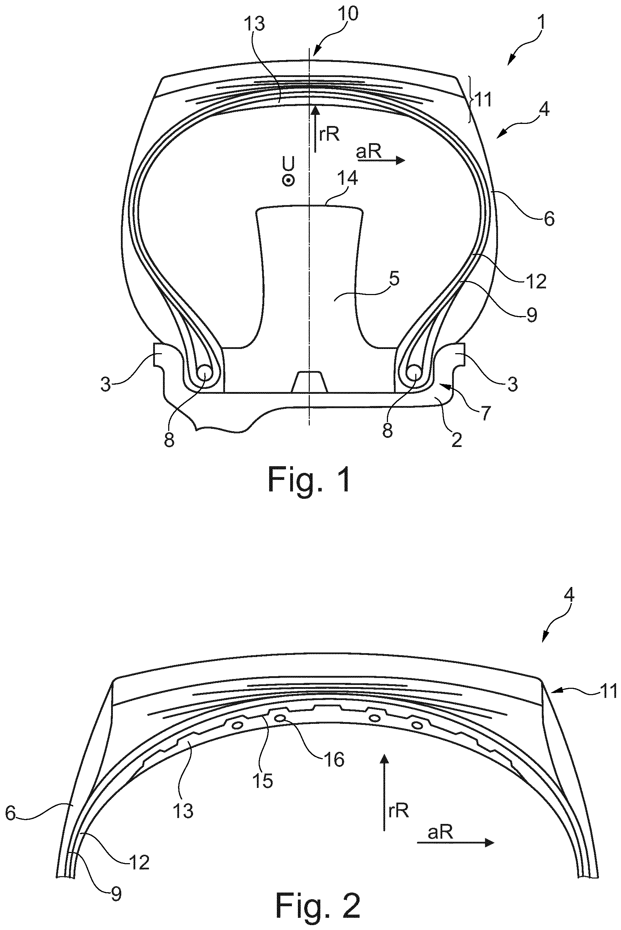

Die Fig. 1 zeigt einen Radialschnitt durch ein erfindungsgemäßes Radsystem 1 aufweisend eine Felge 2 mit Felgenhörnern 3, einen auf der Felge 2 montierten erfindungsgemäßen Fahrzeugluftreifen 4 und eine auf der Felge 2 axial innerhalb des Fahrzeugluftreifens 4 montierte Stützvorrichtung 5, deren radiale Höhe die radiale Höhe der Felgenhörner 3 übersteigt, wobei im Notlauf die Stützvorrichtung 5 radial außerhalb der radialen Höhe der Felgenhörner 3 mit dem Fahrzeugluftreifen 4 in Berührung kommt und Last aufnimmt. Die Stützvorrichtung 5 ist dabei im Bereich der Felge 2 so ausgebildet, dass im Notlauf die Wulstbereiche des Fahrzeugluftreifens 4 gegen die Felgenhörner 3 der Felge 2 gepresst und somit fixiert werden. Der Fahrzeugluftreifen 4 ist dabei ein Nutzfahrzeugreifen. Der Fahrzeugluftreifen 4 weist Seitenwände 6, Wulste 7 mit je einem Wulstkern 8, eine mehrlagige Karkasse 9, welche vom Zenitbereich 10 des Fahrzeugluftreifens 4 über die Seitenwände 6 bis in die Wulstbereiche reicht und dort durch Umschlingen zugfester Wulstkerne 8 verankert ist, ein radial außerhalb der Karkasse 9 befindliches Laufstreifen-Gürtelpaket 11 und eine radial innerhalb der Karkasse 9 angeordnete weitgehend luftundurchlässige Innenschicht 12, beispielsweise aus einem Halobutyl-Kautschuk, aufweist.

Der Fahrzeugluftreifen 4 weist im Zenitbereich 10 eine Notlaufschicht 13 aus elastomerem Material auf, welche radial innerhalb der Innenschicht 12 und somit radial innerhalb der Karkasse 9 angeordnet ist. Die Notlaufschicht 13 erstreckt sich geschlossen über den gesamten Umfang des Fahrzeugluftreifens 4. Die Notlaufschicht 13 ist dabei so angeordnet, dass sie im Notlauf die Stützvorrichtung 5 kontaktiert und dass dann die Lastaufnahme durch die Stützvorrichtung 5 zumindest teilweise im Bereich der dann entstandenen Kontaktfläche zwischen Notlaufschicht 13 und Stützvorrichtung 5 erfolgt. Das elastomere Material der Notlaufschicht 13 enthält Wachs, wobei der Gewichtsanteil (Gew.-%) von Wachs am elastomeren Material größer ist als der Gewichtsanteil von Wachs an der Karkassgummierung. Die Notlaufschicht 13 ist in ihrer axialen Ausdehnung im Fahrzeugluftreifen 4 so positioniert, dass die axiale Ausdehnung der Notlaufschicht 13 zumindest der axialen Ausdehnung der im Notlauf Last aufnehmenden Oberfläche 14 der Stützvorrichtung 5 entspricht.

Die Fig. 2 zeigt einen Ausschnitt eines Radialschnittes durch einen erfindungsgemäßen Fahrzeugluftreifen 4 aufweisend eine Notlaufschicht 13. Der Fahrzeugluftreifen 4 unterscheidet sich von dem in Fig. 1 gezeigten Fahrzeugluftreifen 4 dadurch, dass die radial äußere Oberfläche der Notlaufschicht 13 ein Profil 15 und die daran angrenzende Oberfläche der radial nächsten Schicht ein dazu gegengleiches Profil 15 aufweist. Zudem enthält das elastomere Material der Notlaufschicht Fett, wobei der Gewichtsanteil (Gew.-%) an Fett am elastomeren Material größer ist als der Gewichtsanteil an Fett an der Karkassgummierung. Weiter weist die Notlaufschicht 13 Depots 16 auf, welche ein Fett als Substanz mit reibungsmindernder Wirkung enthalten. Die Notlaufschicht 13 weist eine spezifische Wärmeleitfähigkeit auf, die unter Notlaufbedingungen größer ist als die spezifische Wärmeleitfähigkeit der Innenschicht 12 und der Gummierung der Karkasse 9. Es handelt sich dabei um einen Nutzfahrzeugreifen für militärische Einsatzkräfte.

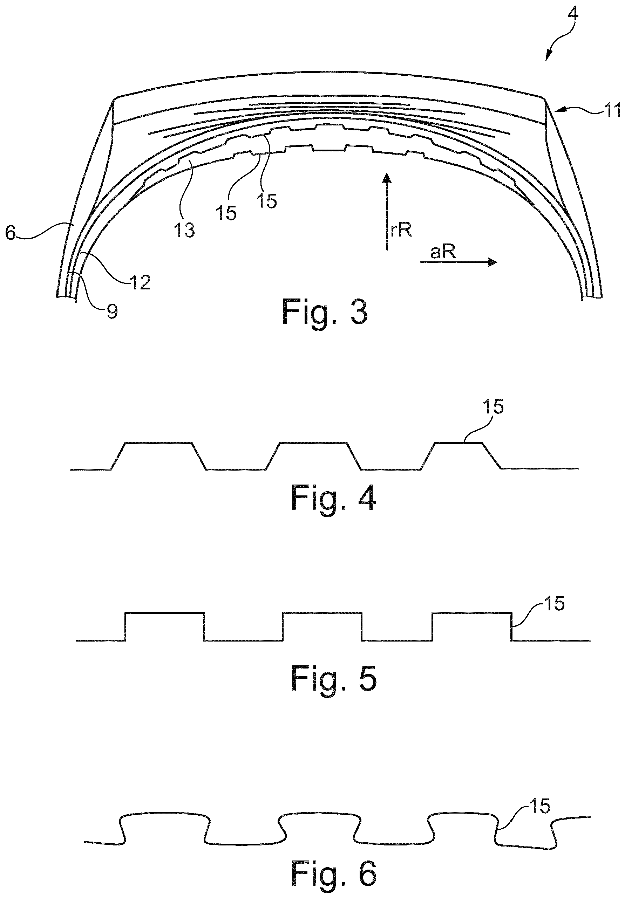

Die Fig. 3 zeigt einen Ausschnitt eines Radialschnittes durch einen weiteren erfindungsgemäß ausgeführten Fahrzeugluftreifen 4 aufweisend eine Notlaufschicht 13. Der Fahrzeugluftreifen 4 unterscheidet sich von dem in Fig. 1 gezeigten Fahrzeugluftreifen 4 dadurch, dass die radial äußere Oberfläche der Notlaufschicht 13 ein Profil 15 und die daran angrenzende Oberfläche der radial nächsten Schicht ein dazu gegengleiches Profil 15 aufweist. Auch die radial innere Oberfläche der Notlaufschicht 13 weist ein Profil 15 auf. Das elastomere Material der Notlaufschicht 13 weist unter Notlaufbedingungen eine spezifische Wärmeleitfähigkeit auf, die höher ist als die spezifische Wärmeleitfähigkeit der Innenschicht 12.

Die Figuren 4 bis 6 zeigen jeweils einen Abschnitt eines Profils 15 der radial äußeren und / oder der radial inneren Oberfläche einer Notlaufschicht 13. Der Einfachheit halber ist die Krümmung der Notlaufschicht 13 nicht dargestellt.

### Bezugszeichenliste

- 1: Radsystem
- 2: Felge
- 3: Felgenhorn
- 4: Fahrzeugluftreifen
- 5: Stützvorrichtung
- 6: Seitenwand
- 7: Wulst
- 8: Wulstkern
- 9: Karkasse
- 10: Zenitbereich
- 11: Laufstreifen-Gürtelpaket
- 12: Innenschicht
- 13: Notlaufschicht
- 14: Last aufnehmende Oberfläche
- 15: Profil
- 16: Depot

- rR: radiale Richtung
- aR: axiale Richtung
- U: Umfangsrichtung

## Patentansprüche

1. Fahrzeugluftreifen (4) für ein Radsystem (1) aufweisend eine
• Felge (2) mit Felgenhörnern,
• den auf der Felge (2) montierten Fahrzeugluftreifen (4) und
• eine auf der Felge (2) axial innerhalb des Fahrzeugluftreifens (4) montierte Stützvorrichtung (5), deren radiale Höhe die radiale Höhe der Felgenhörner (3) übersteigt, wobei im Notlauf die Stützvorrichtung (5) radial außerhalb der radialen Höhe der Felgenhörner (3) mit dem Fahrzeugluftreifen (4) in Berührung kommt und Last aufnimmt,
• wobei der Fahrzeugluftreifen (4) Seitenwände (6), Wulste (7) mit Wulstkernen (8), eine Karkasse (9), welche vom Zenitbereich (10) des Fahrzeugluftreifens (4) über die Seitenwände (6) bis in die Wulstbereiche reicht und dort durch Umschlingen zugfester Wulstkerne (8) verankert ist, ein radial außerhalb der Karkasse (9) befindliches Laufstreifen-Gürtelpaket (11) und eine radial innerhalb der Karkasse (9) angeordnete Innenschicht (12) aufweist,
• wobei der Fahrzeugluftreifen (4) radial innerhalb der Innenschicht (12) eine Notlaufschicht (13) aufweist,
• wobei die Notlaufschicht (13) so angeordnet ist, dass im Notlauf die Notlaufschicht (13) und die Stützvorrichtung (5) kontaktieren und wobei die Lastaufnahme durch die Stützvorrichtung (5) zumindest teilweise im Bereich der Kontaktfläche zwischen Notlaufschicht (13) und Stützvorrichtung (5) erfolgt,
**dadurch gekennzeichnet, dass**
• die Notlaufschicht (13) aus elastomerem Material ist, und
• dass das elastomere Material zumindest ein Wachs und / oder zumindest ein Fett enthält, wobei das elastomere Material einen höheren Gewichtsanteil (Gew.-%) an Wachs und / oder an Fett als die Karkassgummierung aufweist.

2. Fahrzeugluftreifen (4) nach Anspruch 1, **dadurch gekennzeichnet, dass** sich das elastomere Material der Notlaufschicht (13) in radialer Richtung ändert, bevorzugt dass sich der Gewichtsanteil (Gew.-%) an Fett und / oder Wachs des elastomeren Materials in radialer Richtung ändert.

3. Fahrzeugluftreifen (4) nach einem der Ansprüche 1 oder 2, **dadurch gekennzeichnet, dass** die Notlaufschicht (13) ein oder mehrere Depots (16) aufweist, welche eine Substanz mit reibungsmindernder Wirkung, insbesondere eine Substanz mit reibungsmindernder Wirkung enthaltend zumindest ein Wachs und / oder zumindest ein Fett, enthalten.

4. Fahrzeugluftreifen (4) nach einem der Ansprüche 1 bis 3, **dadurch gekennzeichnet, dass** zwischen der Notlaufschicht (13) und der Karkasse (9) eine Schicht angeordnet ist, die für das Wachs und / oder das Fett des elastomeren Materials der Notlaufschicht (13) weitgehend undurchlässig ist.

5. Fahrzeugluftreifen (4) nach einem der Ansprüche 1 bis 4, **dadurch gekennzeichnet, dass** die Notlaufschicht (13) eine spezifische Wärmeleitfähigkeit aufweist, die größer ist als die spezifische Wärmeleitfähigkeit der Innenschicht (12) und/oder die größer ist als die spezifische Wärmeleitfähigkeit der Karkassgummierung.

6. Fahrzeugluftreifen (4) nach einem der Ansprüche 1 bis 5, **dadurch gekennzeichnet, dass** die Notlaufschicht (13) so angeordnet ist, dass die axiale Ausdehnung der Notlaufschicht (13) zumindest der axialen Ausdehnung der im Notlauf Last aufnehmenden Oberfläche (14) der Stützvorrichtung (5) entspricht.

7. Fahrzeugluftreifen (4) nach einem der Ansprüche 1 bis 6, **dadurch gekennzeichnet, dass** die radial innere Oberfläche der Notlaufschicht (13) ein Profil (15) aufweist.

8. Fahrzeugluftreifen (4) nach einem der Ansprüche 1 bis 7, **dadurch gekennzeichnet, dass** die radial äußere Oberfläche der Notlaufschicht (13) ein Profil (15) aufweist und dass die daran angrenzende Oberfläche der radial nächsten Schicht ein dazu gegengleiches Profil (15) aufweist.

9. Fahrzeugluftreifen (4) nach einem der Ansprüche 1 bis 8, **dadurch gekennzeichnet, dass** es sich um einen Nutzfahrzeugreifen, bevorzugt um einen Nutzfahrzeugreifen für ein Militärfahrzeug, ein Feuerwehrfahrzeug, ein Unimog, ein Off-Road-Fahrzeug oder ein Fahrzeug für den Einsatz in Steinbrüchen, Minen oder als Kran, handelt.

10. Radsystem (1) für Kraftfahrzeuge aufweisend eine Felge (2) mit Felgenhörnern (3), einen auf der Felge (2) montierten Fahrzeugluftreifen (4) gemäß zumindest einem der Ansprüche 1 bis 9 aufweisend eine Notlaufschicht (13) aus elastomerem Material enthaltend Wachs und / oder Fett und eine auf der Felge (2) axial innerhalb des Fahrzeugluftreifens (4) montierte Stützvorrichtung (5), deren radiale Höhe die radiale Höhe der Felgenhörner (3) übersteigt, wobei im Notlauf die Stützvorrichtung (5) radial außerhalb der radialen Höhe der Felgenhörner (3) mit dem Fahrzeugluftreifen (4) in Berührung kommt und Last aufnimmt.

## Claims

1. Pneumatic vehicle tyre (4) for a wheel system (1) comprising a
• rim (2) with rim flanges,
• the pneumatic vehicle tyre (4), which is fitted on the rim (2), and
• a supporting device (5), which is fitted on the rim (2) axially inside the pneumatic vehicle tyre (4) and the radial height of which exceeds the radial height of the rim flanges (3), wherein during emergency running the supporting device (5) comes into contact with the pneumatic vehicle tyre (4) radially outside the radial height of the rim flanges (3) and absorbs load,
• wherein the pneumatic vehicle tyre (4) comprises sidewalls (6), beads (7) with bead cores (8), a carcass (9), which reaches from the crown region (10) of the pneumatic vehicle tyre (4) over the sidewalls (6) into the bead regions and is anchored there by wrapping around tension-resistant bead cores (8), a tread/belt assembly (11), located radially outside the carcass (9), and an inner layer (12), arranged radially inside the carcass (9),
• wherein the pneumatic vehicle tyre (4) has an emergency running layer (13) radially inside the inner layer (12),
• wherein the emergency running layer (13) is arranged in such a way that during emergency running the emergency running layer (13) and the supporting device (5) are in contact and wherein the load absorption by the supporting device (5) takes place at least partially in the region of the contact area between the emergency running layer (13) and the supporting device (5),
**characterized in that**
• the emergency running layer (13) is of elastomeric material, and
• **in that** the elastomeric material contains at least one wax and/or at least one grease, wherein the elastomeric material has a higher proportion by weight (% by weight) of wax and/or of grease than the carcass rubber covering.

2. Pneumatic vehicle tyre (4) according to Claim 1, **characterized in that** the elastomeric material of the emergency running layer (13) changes in the radial direction, preferably **in that** the proportion by weight (% by weight) of grease and/or wax of the elastomeric material changes in the radial direction.

3. Pneumatic vehicle tyre (4) according to either of Claims 1 and 2, **characterized in that** the emergency running layer (13) comprises one or more depots (16), which contain a substance with a friction-reducing effect, in particular a substance with a friction-reducing effect containing at least one wax and/or at least one grease.

4. Pneumatic vehicle tyre (4) according to one of Claims 1 to 3, **characterized in that** a layer which is largely impermeable to the wax and/or the grease of the elastomeric material of the emergency running layer (13) is arranged between the emergency running layer (13) and the carcass (9).

5. Pneumatic vehicle tyre (4) according to one of Claims 1 to 4, **characterized in that** the emergency running layer (13) has a specific thermal conductivity which is greater than the specific thermal conductivity of the inner layer (12) and/or which is greater than the specific thermal conductivity of the carcass rubber covering.

6. Pneumatic vehicle tyre (4) according to one of Claims 1 to 5, **characterized in that** the emergency running layer (13) is arranged in such a way that the axial extent of the emergency running layer (13) corresponds at least to the axial extent of the surface (14) of the supporting device (5) that absorbs load during emergency running.

7. Pneumatic vehicle tyre (4) according to one of Claims 1 to 6, **characterized in that** the radially inner surface of the emergency running layer (13) has a profile (15).

8. Pneumatic vehicle tyre (4) according to one of Claims 1 to 7, **characterized in that** the radially outer surface of the emergency running layer (13) has a profile (15) and **in that** the surface of the radially next layer adjacent thereto has a profile (15) inversely opposite thereto.

9. Pneumatic vehicle tyre (4) according to one of Claims 1 to 8, **characterized in that** it is a utility vehicle tyre, preferably a utility vehicle tyre for a military vehicle, a fire truck, a Unimog, an off-road vehicle or a vehicle for use in quarries, mines or as a crane.

10. Wheel system (1) for motor vehicles comprising a rim (2) with rim flanges (3), a pneumatic vehicle tyre (4), which is fitted on the rim (2), according to at least one of Claims 1 to 9, comprising an emergency running layer (13) of elastomeric material containing wax and/or grease, and a supporting device (5), which is fitted on the rim (2) axially inside the pneumatic vehicle tyre (4) and the radial height of which exceeds the radial height of the rim flanges (3), wherein during emergency running the supporting device (5) comes into contact with the pneumatic vehicle tyre (4) radially outside the radial height of the rim flanges (3) and absorbs load.

## Revendications

1. Pneumatique de véhicule (4) destiné à un système de roue (1) comprenant
• une jante (2) pourvue de rebords de jante,
• le pneumatique de véhicule (4) monté sur la jante (2) et
• un dispositif de support (5) qui est monté sur la jante (2) axialement à l'intérieur du pneumatique de véhicule (4) et dont la hauteur radiale dépasse la hauteur radiale des rebords de jante (3), le dispositif de support (5) venant en contact, en roulement d'urgence, avec le pneumatique de véhicule (4) radialement au-delà de la hauteur radiale des rebords de jante (3) et recevant une charge,
• le pneumatique de véhicule (4) comportant des parois latérales (6), des talons (7) pourvus de tringles de talon (8), une carcasse (9) qui s'étend de la région zénithale (10) du pneumatique de véhicule (4) par-dessus les parois latérales (6) jusque dans les zones de talon où des tringles de talon (8) rigides en traction sont ancrées par enroulement, un paquet de nappes d'armature de bande de roulement (11) situé radialement à l'extérieur de la carcasse (9) et une couche intérieure (12) disposée radialement à l'intérieur de la carcasse (9),
• le pneumatique de véhicule (4) comportant une couche de roulement d'urgence (13) radialement à l'intérieur de la couche intérieure (12),
• la couche de roulement d'urgence (13) étant disposée de manière à ce que la couche de roulement d'urgence (13) et le dispositif de support (5) sont en contact en roulement d'urgence et la réception de charge par le dispositif de support (5) étant effectuée au moins partiellement dans la zone de la surface de contact située entre la couche de roulement d'urgence (13) et le dispositif de support (5),
**caractérisé en ce que**
• la couche de roulement d'urgence (13) est en une matière élastomère, et
• la matière élastomère contient au moins une cire et/ou au moins une graisse, la matière élastomère ayant une proportion en poids (% en poids) de cire et/ou de graisse plus élevée que la gomme de la carcasse.

2. Pneumatique de véhicule (4) selon la revendication 1, **caractérisé en ce que** la matière élastomère de la couche de roulement d'urgence (13) varie dans la direction radiale, de préférence la proportion en poids (% en poids) de graisse et/ou de cire de la matière élastomère varie dans la direction radiale.

3. Pneumatique de véhicule (4) selon l'une des revendications 1 ou 2, **caractérisé en ce que** la couche de roulement d'urgence (13) comporte au moins un dépôt (16) qui contient une substance à effet réducteur de frottement, en particulier une substance à effet réducteur de frottement contenant au moins une cire et/ou au moins une graisse.

4. Pneumatique de véhicule (4) selon l'une des revendications 1 à 3, **caractérisé en ce qu'**une couche, qui est en grande partie imperméable pour la cire et/ou la graisse de la matière élastomère de la couche de roulement d'urgence (13), est disposée entre la couche de roulement d'urgence (13) et la carcasse (9).

5. Pneumatique de véhicule (4) selon l'une des revendications 1 à 4, **caractérisé en ce que** la couche de roulement d'urgence (13) présente une conductivité thermique spécifique qui est supérieure à la conductivité thermique spécifique de la couche intérieure (12) et/ou supérieure à la conductivité thermique spécifique de la gomme de la carcasse.

6. Pneumatique de véhicule (4) selon l'une des revendications 1 à 5, **caractérisé en ce que** la couche de roulement d'urgence (13) est disposée de telle sorte que l'étendue axiale de la couche de roulement d'urgence (13) corresponde au moins à l'étendue axiale de la surface de réception de charge en roulement d'urgence (14) du dispositif de support (5).

7. Pneumatique de véhicule (4) selon l'une des revendications 1 à 6, **caractérisé en ce que** la surface radialement intérieure de la couche de roulement d'urgence (13) présente un profil (15).

8. Pneumatique de véhicule (4) selon l'une des revendications 1 à 7, **caractérisé en ce que** la surface radialement extérieure de la couche de roulage d'urgence (13) présente un profil (15) et **en ce que** la surface adjacente de la couche radialement suivante présente un profil (15) opposé.

9. Pneumatique de véhicule (4) selon l'une des revendications 1 à 8, **caractérisé en ce qu'**il s'agit d'un pneumatique de véhicule utilitaire, de préférence un pneumatique de véhicule utilitaire pour un véhicule militaire, un véhicule de pompiers, un Unimog, un véhicule tout terrain ou un véhicule destiné à être utilisé dans des carrières, des mines ou comme grue.

10. Système de roue (1) destiné à des véhicules automobiles comprenant une jante (2) pourvue de rebords de jante (3), un pneumatique de véhicule (4) monté sur la jante (2) selon l'une au moins des revendications 1 à 9 comprenant une couche de roulement d'urgence (13) en matière élastomère contenant de la cire et/ou de la graisse et un dispositif de support (5) qui est monté sur la jante (2) axialement à l'intérieur du pneumatique de véhicule (4) et dont la hauteur radiale dépasse la hauteur radiale des rebords de jante (3), le dispositif de support (5) venant en contact, en roulement d'urgence, avec le pneumatique de véhicule (4) radialement au-delà de la hauteur radiale des rebords de jante (3) et recevant une charge.
